# EUROPÄISCHE PATENTSCHRIFT

(11) **EP 2 435 236 B1**
(45) Veröffentlichungstag und Bekanntmachung des Hinweises auf die Patenterteilung: **27.03.2013**
(21) Anmeldenummer: 10732268.7
(22) Anmeldetag: 31.05.2010
(51) Int. Cl.: B29C 65/14

(54) **POSITIONIEREINRICHTUNG FÜR EIN HANDSCHWEISSGERÄT**
POSITIONING DEVICE FOR A MANUAL WELDING MACHINE
DISPOSITIF DE POSITIONNEMENT POUR UN APPAREIL DE SOUDAGE MANUEL

(30) Priorität: 29.05.2009 DE 102009023219; 20.11.2009 DE 102009053863
(43) Veröffentlichungstag der Anmeldung: 04.04.2012
(73) Patentinhaber: Plasticon Germany GmbH, 46539 Dinslaken (DE)
(72) Erfinder: VAN LAAK, Hermann, 46569 Hünxe (DE)
(74) Vertreter: Demski, Siegfried
(86) Internationale Anmeldenummer: PCT/DE2010/000589
(87) Internationale Veröffentlichungsnummer: WO 2010/136024

(56) Entgegenhaltungen:
- EP-A2- 0 995 541
- DE-A1-102006 035 250

## Beschreibung

Die Erfindung betrifft eine Positioniereinrichtung für ein Handschweißgerät, insbesondere für ein Kunststoffschweißgerät, umfassend zumindest eine dem Handschweißgerät zugeordnete Andruckblende und einem dem zu verschweißenden Material zugeordneten Positionierring.

Gattungsgemäße Handschweißgeräte werden beispielsweise zur Verschweißung von Auskleidungsfolien für tragende Konstruktionen, wie Behälter, Apparate, Kanäle, Gehäuse oder Kolonnen, benötigt, die entweder aus Metall, gegebenenfalls mit einer nur bedingt beständigen Beschichtung versehen sind oder aus Kunststoff oder GFK bestehen. Die hierbei verwendeten Materialien sind in der Regel nicht säurebeständig oder unrein, sodass eine zusätzliche säure- oder laugenbeständige Auskleidung der Behälter erforderlich ist. Ferner wird eine Auskleidung dort erforderlich, wo mit korrosiven Gasen oder flüssigen Substanzen gearbeitet wird und die Gehäuseinnenwandungen diesen Gasen beziehungsweise Flüssigkeiten ausgesetzt sind. Darüber hinaus sind Auskleidungsmaterialien für hochreine Behälter (Semiconductor) und für hochbeständige Behälter (Chemie) sowie für Kolonnen und andere Apparate (Chemie) notwendig. Zum Korrosionsschutz der tragenden Konstruktion und insbesondere den Wänden werden die den Strömungsbereichen zugewandten Innenflächen daher mit Korrosionsschutzfolien (Auskleidungsmaterial; Inlinerfolie) aus Kunststoff verkleidet. Hierbei gelangt insbesondere der Kunststoff MFA, PFA oder FEP in Folienform zur Anwendung, weil dieser Kunststoff einen ausreichenden Korrosionsschutz bietet. Ferner kommen Kunststoffmaterialien infrage, welche zu Folien verarbeitet werden können und eine ausreichende chemische Resistenz aufweisen.

Eine gattungsgemäße Positioniereinrichtung ist aus der EP 0995 541 bekannt.

Damit ein umfassender Korrosionsschutz der tragenden Konstruktion gewährleistet ist, wird diese mit Auskleidungsmaterialien, vorzugsweise Kunststoffbahnen, vollflächig ausgekleidet, wobei die Auskleidungsmaterialien über eine Vielzahl von Befestigungs- oder Fixpunkten punktuell an der Wand innenfläche der tragenden Konstruktion gehalten werden. Die erforderlichen Befestigungs- oder Fixpunkte sind hierbei an der Innenwand der tragenden Konstruktion befestigt und werden zur Aufhängung genutzt, wobei üblicherweise pro m² nur wenige Befestigungspunkte vorgesehen sind. Die Befestigungs- oder Fixpunkte bestehen nach dem bekannten Stand der Technik aus Schraubbolzen oder ähnlichen Metallteilen, welche mit der Gehäuseinnenwandung verbunden und zur Festlegung der Auskleidungsmaterialien unter Verwendung weiterer Hilfsmittel vorgesehen sind. Beispielsweise können die Befestigungs- oder Fixpunkte aus Metall mit einer metallischen Gehäuseinnenwandung verschraubt, verklebt oder verschweißt werden. Alternativ kommt der Einsatz von Kunststoffmaterialien in Betracht, welche in der Regel in gleicher Weise befestigt werden, wobei es auf das Material der tragenden Konstruktion ankommt, welche Befestigungsart gewählt wird. Kunststoffmaterialien weisen in der Regel eine höhere chemische Resistenz als metallische Standardlösungen auf, sodass die Befestigungspunkte meistens nachträglich zusätzlich mit einer Folie abgedeckt werden müssen, wenn offen liegende unreine Kunststoffe oder Metallteile in den Innenraum der Konstruktion ragen. Hierdurch ist ein vermeidbarer Arbeitsaufwand erforderlich.

Die zur Befestigung vorgesehenen Auskleidungsmaterialien müssen dauerhaft mit der Wandinnenfläche der tragenden Konstruktion verbunden werden, insbesondere deshalb, weil aufgrund von Druckschwankungen der flüssigen oder gasförmigen Medien, welche beispielsweise in die tragende Konstruktion eingelassen werden, und den hierdurch entstehenden mechanischen Beanspruchungen eine ausreichende Haltekraft erforderlich ist. Zur Verschweißung der Auskleidungsmaterialen mit den Befestigungen und Fixpunkten werden Handschweißgeräte eingesetzt.

Die verwendeten Befestigungs- und Fixpunkte bestehen aus einem kunststoffkompatiblen Trägermaterial, welches vorzugsweise lichttransparent ausgeführt ist und eine einseitig absorbierende Beschichtung aufweist. Die Beschichtung kann gegebenenfalls auch zweiseitig ausgebildet sein oder kann in einem Zwischenschritt durch beispielsweise ein Handschweißgerät aufgeschweißt werden, sodass ein Befestigungs- und Fixpunkt beispielsweise zur Befestigung einer oder zweier Inlinerfolien verwendet werden kann. Die absorbierende Beschichtung dient hierbei dazu, dass mit Hilfe der einzubringenden elektromagnetischen Strahlung eine Erwärmung erfolgt und dieser Energieeintrag auf das Material des Befestigungs- und Fixpunktes beziehungsweise die zu verbindenden Kunststoffmaterialien übertragen wird, sodass infolge der stattfindenden Plastifizierung eine Verbindung zwischen dem Material des Befestigungs- und Fixpunktes und der Inlinerfolien zustande kommt, wobei das Material im Wellenlängenbereich von 300 bis 2.500 nm nicht absorbierend ausgebildet ist und eine absorbierende Beschichtung im Wellenlängenbereich von 150 bis 2.500 nm, vorzugsweise 500 bis 1.500 nm, besonders bevorzugt von 800 bis 1.000 nm absorbiert. Das verwendete Material besitzt eine Dicke von 1,0 bis 5,0 mm, während die absorbierende Beschichtung eine Schichtdicke von 0,05 bis 0,5 mm, vorzugsweise 0,1 bis 0,4 mm und besonders bevorzugt von 0,2 bis 0,3 mm aufweist. Damit die Inlinerfolien einen Abstand zueinander einhalten weist das Material der Befestigungs- und Fixpunkte eine Dicke von 1,0 bis 10,0 mm, vorzugsweise 1,5 bis 5,0 mm, besonders bevorzugt 2,0 bis 4,0 mm auf, sodass nach dem Aufbringen einer zweiten Inlinerfolie ein Zwischenraum im Millimeterbereich entsteht.

Durch die alleinige Verwendung von Kunststoff für die Befestigung- und Fixpunkte wird das Problem einer Zerstörung durch korrosive Gase infolge Permeation oder Flüssigkeiten bei Leckagen vermieden, wobei durch eine Verschweißung der Befestigungs- und Fixpunkte einerseits mit der Innenfläche der tragenden Konstruktion und andererseits mit dem Auskleidungsmaterial eine hochfeste und widerstandfähige Verbindung geschaffen wird. Vorzugsweise wird hierbei eine Verschweißung mit Hilfe von elektromagnetischer Strahlung vorgenommen, wobei einerseits die Befestigungs- und Fixpunkte aus einem Kunststoffmaterial bestehen und andererseits die Innenfläche der tragenden Konstruktion oder das Auskleidungsmaterial ebenfalls aus einem Kunststoff besteht, sodass im Falle einer ausreichenden Kompatibilität die Kunststoffe unmittelbar miteinander verschweißt werden können. Zu diesem Zweck ist ein korrespondierendes Teil der verwendeten Kunststoffmaterialien entweder mit einer absorbierenden Beschichtung versehen oder mit absorbierenden Partikeln angereichert. Soweit eine tragende Konstruktion beispielsweise aus einem Metall gefertigt wurde oder aus einem Kunststoffmaterial besteht, welches nicht verschweißbar ist, zum Beispiel GFK, erfolgt eine zusätzliche Auskleidung der Innenwände mit einer Kunststoffschicht, welche einerseits zum weiteren Schutz der tragenden Konstruktion dient und andererseits zum Verschweißen mit den Befestigungs- und Fixpunkten geeignet ist. Die verwendeten Auskleidungsmaterialien aus Kunststoff können anschließend nach dem Befestigen der Befestigungs- und Fixpunkte ebenso mit diesen verschweißt werden, sodass in der jeweiligen Konstruktion zusätzlich zur Innenfläche eine zweite innen liegende Inlinerfolie vorhanden ist, welche aus dem Auskleidungsmaterial besteht und beabstandet zur eigentlichen Innenfläche angeordnet ist. Durch die Verwendung von kompatiblen Kunststoffmaterialien können diese unmittelbar miteinander verschweißt werden, wobei die hierzu verwendeten Befestigungs- und Fixpunkte mit einer ersten Kontaktfläche einerseits mit der Innenfläche und mit einer zweiten Kontaktfläche andererseits mit dem Auskleidungsmaterial verschweißbar sind. Als Handschweißgerät kommen grundsätzlich alle denkbaren Geräte in Betracht, welche eine Verschweißung der Kunststoffmaterialien ermöglichen.

Vorzugsweise werden die Befestigungs- und Fixpunkte aus einem lichttransparenten Kunststoffmaterial hergestellt, sodass mit Hilfe von elektromagnetischer Strahlung eine Verschweißung der Kunststoffmaterialien beziehungsweise der absorbierenden Schicht mit der Innenfläche oder dem Auskleidungsmaterial ermöglicht wird. Zu diesem Zweck wird vorzugsweise die Innenfläche aus einem lichtabsorbierenden Kunststoffmaterial hergestellt oder es wird eine Innenfläche aus einem Kunststoffmaterial verwendet, das zusätzlich mit einer absorbierenden Beschichtung versehen ist. Das Auskleidungsmaterial wird demgegenüber aus einem lichttransparenten Kunststoffmaterial gefertigt, damit eine nachträgliche Verschweißung mit Hilfe von beispielsweise elektromagnetischer Strahlung ermöglicht wird. In einem solchen Fall kann die Kontaktfläche der Abstandshalter mit einer lichtabsorbierenden Schicht versehen sein oder es wird ein lichtabsorbierender Abstandshalter verwendet, welcher durch seine Formgebung die Bestrahlung der hinteren Kontaktfläche zur Innenfläche hin gewährleistet.

Durch diese Lösungen wird sichergestellt, dass die Abstandshalter mit der Innenfläche und/oder dem Auskleidungsmaterial durch elektromagnetische Strahlung verbindbar sind und somit mit Hilfe der Verschweißung eine dauerhafte Verbindung gewährleistet und darüber hinaus ein rationelles Arbeiten ermöglicht wird.

Für die Wandfläche und das Auskleidungsmaterial können Standardthermoplaste, vorzugsweise PE, PP, PE-UHMW, oder teilfluorierte Thermoplaste, vorzugsweise PVDF, E-CTFE oder hochfluorierte Thermoplaste, vorzugsweise FEP, MFA, PFA oder modifiziertes PTFE, verwendet werden, wobei die absorbierende Beschichtung aus gleichen Kunststoffmaterialien oder bei PE-UHMW und modifiziertem PTFE aus artverwandten Kunststoffmaterialien bestehen kann.

Die zur Verwendung vorgesehenen Kunststoffmaterialien als Auskleidungsmaterial besitzen in den meisten Fällen eine besonders glatte Oberfläche, sodass die zur Verschweißung vorgesehenen Handschweißgeräte sehr leicht abrutschen können und die Verschweißung nicht korrekt ausgeführt wird. Als Schweißbereich kommt hier vorzugsweise die Position der Befestigungs- und Fixpunkte infrage, welche beispielsweise eine Größe von cirka 3 bis 10 cm aufweisen können. Nach dem Verlegen des Auskleidungsmaterials besteht somit die Notwendigkeit mit Hilfe eines Handschweißgerätes exakt die Befestigungs- und Fixpunkte mit dem Auskleidungsmaterial zu verschweißen. Zu diesem Zweck wird ein Handschweißgerät auf das Auskleidungsmaterial aufgesetzt.

Der vorliegenden Erfindung liegt die Aufgabe zugrunde, die Handhabung eines Handschweißgerätes wesentlich zu vereinfachen und eine sichere Verschweißung der Auskleidungsmaterialien mit den Befestigungs- und Fixpunkten zu ermöglichen.

Erfindungsgemäß ist zur Lösung der Aufgabe vorgesehen, dass ein Positionierring auf dem zu verschweißenden Material festlegbar ist und eine in den Positionierring einsetzbare Andruckblende einen über dem Umfang gleichmäßig verteilten Druck auf die zu verschweißenden Materialien überträgt. Weitere vorteilhafte Ausgestaltungen der Erfindung ergeben sich aus den Unteransprüchen.

Je nach Art des verwendeten Handschweißgerätes wird durch den vorgesehenen Schweißkopf das Auskleidungsmaterial und insbesondere der hinter dem Auskleidungsmaterial liegende Befestigungs- und Fixpunkte abgedeckt, sodass eine exakte Positionierung und spätere Kontrolle erheblich erschwert ist. Darüber hinaus besteht die Gefahr, dass das Handschweißgerät nach dem Aufsetzen durch Aufbringen des erforderlichen Anpressdruckes gegenüber dem Befestigungs- und Fixpunkt verrutscht und somit nur eine teilweise Verschweißung stattfindet. Durch den erfindungsgemäßen Positionierring, welcher zuvor auf dem zu verschweißenden Material festlegbar ist und eine in den Positionierring einsetzbare Andruckblende, welche unmittelbar dem Handschweißgerät zugeordnet ist, wird ein über den Umfang der Andruckblende gleichmäßig verteilter Druck aufgebracht. Hierdurch wird sichergestellt, dass das zu befestigende Auskleidungsmaterial gleichmäßig gegen den Befestigungs- und Fixpunkt gedrückt wird und somit eine sichere Verschweißung des Auskleidungsmaterials mit dem Befestigungs- und Fixpunkt erfolgen kann. In einem ersten Arbeitsschritt wird zunächst der Positionierring auf dem Auskleidungsmaterial befestigt und nach abschließender Kontrolle das Handschweißgerät auf diesen Positionierring aufgesetzt, um die erforderliche Verschweißung vorzunehmen. Hierdurch ist bereits sichergestellt, dass ein nachträgliches Verrutschen auf dem Ausgangsmaterial verhindert wird und darüber hinaus wird durch eine vorherige Kontrolle ein sicheres Aufsetzen auf das Auskleidungsmaterial in Höhe der Befestigungs- und Fixpunkte gewährleistet. Zu diesem Zweck wird die Andruckblende, welche dem Handschweißgerät zugeordnet ist, in den Positionierring eingesetzt, sodass über Positionierring und Andruckblende die Position des Handschweißgerätes eindeutig bestimmbar und festgelegt ist. Zur Vermeidung eines unterschiedlichen Anpressdruckes, beispielsweise wenn das Handschweißgerät nicht senkrecht zum Auskleidungsmaterial aufgesetzt wird, ist im Weiteren vorgesehen, dass die einsetzbare Andruckblende gegenüber dem Handschweißgerät druckausgleichend gelagert ist. Durch die vorgesehene erfindungsgemäße Lagerung der Andruckblende gegenüber dem Handschweißgerät ist somit auch bei einem nicht senkrechten Aufsetzen des Handschweißgerätes auf das Auskleidungsmaterial ein gleichmäßiger Anpressdruck gewährleistet, wobei die Andruckblende immer vollflächig in dem Positionierring einsitzt und somit unmittelbar flächig auf dem Auskleidungsmaterial aufliegt und den notwendigen Anpressdruck für die Verschweißung ermöglicht. Durch diese Maßnahmen wird ein gleichbleibender durchschnittlicher Abstand zwischen der elektromagnetischen Strahlungsquelle und der zu verschweißenden Ebene (Fokussierebene) eingehalten. Hierbei wird insbesondere die Dicke des Auskleidungsmaterials berücksichtigt, sodass die Fokussierebene unmittelbar hinter dem Auskleidungsmaterial liegt und damit eine sichere Verschweißung zwischen dem Befestigungs- und Fixpunkt und Auskleidungsmaterial gewährleistet ist. Soweit elektromagnetische Strahlungsquellen, wie beispielsweise Laser eingesetzt werden, deren Fokussierebene einstellbar ist, kommt es nicht auf die Einhaltung des Fokussierabstandes an.

In besonderer Ausgestaltung der Erfindung ist vorgesehen, dass der Positionierring als Vakuumring ausgebildet ist und zumindest einen Vakuumanschluss für eine Vakuumpumpe und mehrere, vorzugsweise vier, Saugfüße aufweist, welche auf dem zu bearbeitenden Material mit Unterdruck festlegbar sind. Die aufgezeigte Lösung ermöglicht mit einfachsten technischen Hilfsmitteln den Positionierring für den vorgesehenen Schweißvorgang in der entsprechenden Position auf dem Auskleidungsmaterial zunächst aufzusetzen und nach Erzeugen eines Vakuums mit dem erforderlichen Unterdruck über die vier Saugnäpfe einen sicheren Halt für den Arbeitsvorgang zu gewährleisten.

Alternativ besteht die Möglichkeit einen Positionierring mit einem umlaufenden Saugring zu verwenden, welcher ebenfalls auf dem Auskleidungsmaterial festlegbar ist, wobei über ein Vakuumanschluss ein Unterdruck erzeugt werden kann, welcher dazu führt, dass der Saugring über den gesamten Umfang auf dem Auskleidungsmaterial festlegbar ist.

Zum Aufsetzen des Handschweißgerätes weist der Positionierring eine radiale Ausnehmung auf, in welche eine Führungseinrichtung mit Andruckblende einsetzbar ist. Zu diesem Zweck ist die Führungseinrichtung unmittelbar mit dem Handschweißgerät verbunden, wobei die Führungseinrichtung beispielsweise aus mehreren, vorzugsweise drei, Flanschscheiben bestehen kann. Eine erste Flanschscheibe dient zur Befestigung am Handschweißgerät, beispielsweise über eine Verschraubung. Die weitere diametral abgewandte Flanschscheibe ist als Führungsring ausgebildet und wird in die vorhandene Ausnehmung des Positionierringes eingesetzt. Zwischen beiden äußeren Flanschscheiben ist zumindest eine weitere dritte Flanschscheibe angeordnet, welche lediglich zur Verbindung der äußeren Flanschscheiben vorgesehen ist, und zwar über eine schwenkbewegliche Lagerung. Die mittlere Flanschscheibe ist hierbei mit den jeweils beiden benachbarten Flanschscheiben über zwei paarweise angeordnete Lagerelemente verbunden, welche eine Schwenkachse bilden, sodass die mittlere Flanschscheibe einerseits gegenüber dem Führungsring und andererseits gegenüber dem Handschweißgerät verschwenkbar gestaltet ist. Damit eine Anlage vollflächig über den gesamten Kreisumfang des Führungsringes mit gleichmäßiger Andruckkraft gewährleistet ist, ist die Schwenkachse der ersten und zweiten Flanschscheibe und die der zweiten Flanschscheibe und dem Führungsring um 90° versetzt zueinander angeordnet. Hierdurch besteht die Möglichkeit einen Ausgleich des Handschweißgerätes gegenüber der zu verschweißenden Fläche des Auskleidungsmaterials entlang einer X- und Y-Achse schwenkbeweglich zu gestalten. Die dem Positionierring zugeordnete Flanschscheibe kann hierbei zweiteilig ausgebildet sein und besteht aus der Flanschscheibe und einer Andruckblende, welche miteinander verbunden sein können, wobei die Andruckblende unmittelbar auf dem Auskleidungsmaterial zu liegen kommt. Hierbei handelt es sich somit um eine senkrecht zur Schweißebene bewegliche Anordnung des Handschweißgerätes.

Die vorgesehenen Lagerelemente können hierbei jeweils aus zumindest zwei Lagerschalen mit einer Drehachse bestehen, wobei die Drehachse einen überstehenden Kragen und einen Splint aufweist, sodass quasi eine unverlierbare Einheit geschaffen wird.

Alternativ besteht die Möglichkeit, dass die Flanschscheiben jeweils über zumindest drei hydraulische Kolben untereinander verbunden sind, sodass mit Hilfe der hydraulischen Kolben ebenfalls ein gleichmäßiger Anpressdruck erzielt werden kann, wenn beispielsweise das Handschweißgerät nicht im rechten Winkel zum Auskleidungsmaterial aufgesetzt worden ist. Die hydraulischen Kolben können hierzu gegebenenfalls durch eine gemeinsame Druckverbindung einen Druckausgleich ermöglichen, sodass eine selbsttätige Druckanpassung erfolgen kann und somit die Flanschscheiben den Anpressdruck gleichmäßig auf das Auskleidungsmaterial übertragen. Anstelle der hydraulischen Kolben könnte ebenso zumindest ein ringförmiger Schlauch eingesetzt werden, welcher die einzelnen Flanschscheiben miteinander verbindet, wobei der Schlauch mit einem zumindest teilweise inkompressiblen Medium gefüllt ist, sodass auch bei dieser Ausgestaltung ein gleichmäßiger Anpressdruck über die gesamte Andruckfläche erzielbar ist.

Alternativ zu den bisherigen Vorschlägen besteht ferner die Möglichkeit, dass die dem Positionierring zugewandte Flanschscheibe und/oder die Andruckblende über elastische Ausgleichselemente verbunden sind, sodass auch durch diese Lösung ein gleichmäßiger Anpressdruck erzielbar ist. Als elastisches Ausgleichselement kommt beispielsweise zwischen Flanschscheibe und Andruckblende ein mit inkompressibler Flüssigkeit gefüllter Schlauch infrage, welcher einerseits mit der Andruckblende und andererseits mit der Flanschscheibe verbunden ist, sodass ein über das Handschweißgerät vorgenommener Anpressdruck über den mit einer inkompressiblen Flüssigkeit gefüllten Schlauch auf die Andruckblende übertragen wird. Als weitere Alternative besteht die Möglichkeit die Andruckblende auf der zur Anlage vorgesehenen Außenseite zumindest partiell mit gummielastischen Auflagen zu versehen, sodass über diese elastischen Auflagen ebenfalls eine gleichmäßige Flächenpressung erzielt werden kann, wobei nicht ausgeschlossen ist, dass mehrere der vorgeschlagenen Lösungen miteinander kombiniert werden. Insbesondere kann die vorgesehene Andruckblende radial außen liegende und/oder radial innen liegende Ausgleichselemente aufweisen. Alternativ können die elastischen Ausgleichselemente auch zwischen den Flanschscheiben angeordnet sein. Hierbei handelt es sich um eine relativ starre Ausführung, welche keine Verschwenkungsmöglichkeit besitzt, jedoch mit Hilfe der elastischen Ausgleichselemente ebenfalls für einen gleichmäßigen Anpressdruck an das Auskleidungsmaterial geeignet ist.

Durch die Verbindung der Flanschscheiben mit der vorgesehenen Lagerung besteht somit die Möglichkeit ein nicht im rechten Winkel zum Auskleidungsmaterial aufgesetztes Handschweißgerät trotzdem zur Herstellung einer optimalen Schweißverbindung zu verwenden. Durch die schwenkbewegliche Lagerung der Flanschscheiben gegenüber der Längsachse des Handschweißgerätes wird der erforderliche Druck in Richtung auf das Auskleidungsmaterial ausgeglichen und somit eine Flächenpressung mit einer Druckverteilung über 360° der Andruckblende erzielt, sodass eine gleichmäßige Flächenpressung vorliegt.

Vorzugsweise wird der Anpressdruck über die dritte, als Führungsring ausgebildete Flanschscheibe und eine Andruckblende auf das Auskleidungsmaterial erzeugt, wobei die Andruckblende mit der Flanschscheibe verbunden, vorzugsweise verschraubt ist. Die Andruckblende selbst ermöglicht den Durchtritt von elektromagnetischer Strahlung auf das zu bearbeitende Auskleidungsmaterial, sodass die erforderliche Plastifizierung der Kunststoffmaterialien exakt im vorzunehmenden Schweißbereich mit geringer Dosierung erfolgen kann und das Auskleidungsmaterial darüber hinaus im angrenzenden Bereich seine Struktur beibehält.

In weiterer Ausgestaltung der Erfindung ist vorgesehen, dass die Andruckblende als Lochmaske mit kreisringförmig angeordneten segmentartigen Durchbrüchen ausgestaltet ist, durch welche hindurch die elektromagnetische Strahlung in die Kunststoffmaterialien gelangt und von den absorbierenden Schichten in Wärme umgewandelt wird. Alternativ besteht die Möglichkeit, dass die Andruckblende zumindest teilweise aus einem Material besteht, welches für elektromagnetische Strahlung transparent ist, beispielsweise Glas oder ein transparenter Kunststoff. Durch die vorgesehenen Ausgestaltungen der Andruckblende wird somit die elektromagnetische Strahlung auf eine geringe Fläche, welche an die Größe der Befestigungs- und Fixpunkte angepasst ist, begrenzt, sodass insbesondere die benachbarten Flächen des Auskleidungsmaterials nicht erwärmt werden und somit in ihrer Struktur erhalten bleiben. Hierdurch wird insbesondere die Elastizität der Materialien nur in geringem Maße beeinflusst und darüber hinaus eine unerwünschte Verformung des Auskleidungsmaterials in der Nähe der Befestigungs- und Fixpunkte verhindert. Durch die konstruktive Ausgestaltung der Positioniereinrichtung, entweder als starre oder als schwenkbewegliche Lösung wird in jedem Fall sichergestellt, dass ein gleichmäßiger Anpressdruck auf das Auskleidungsmaterial ausgeübt wird. Insbesondere wird im Weiteren sichergestellt, dass die Fokussierebene zwischen der elektromagnetischen Strahlungsquelle und der Schweißebene eingehalten wird, soweit dies für die elektromagnetische Strahlungsquelle erforderlich ist.

Ein wesentlicher Vorteil bei der Verwendung der eingesetzten Handschweißgeräte und der Positioniereinrichtung besteht darin, dass die Kunststoffmaterialien und Schweißmitteln nur über einen begrenzten Bereich des Querschnittes plastifiziert werden, wobei sich dieser Bereich im Wesentlichen auf den Bereich der Befestigungs- und Fixpunkte erstreckt. Hierdurch ist der erforderliche Energieeintrag zur Erwärmung der verwendeten Kunststoffmaterialien und des Schweißmittels wesentlich geringer als bei herkömmlichen Schweißverfahren, wobei die zu bearbeitenden Kunststoffmaterialien aufgrund der geringen Plastifizierung nicht dauerhaft verformt werden und somit eine Beschädigung der Auskleidungsmaterialien, beispielsweise in Form von Inlinerfolien, ausgeschlossen werden kann. Darüber hinaus kann das Handschweißgerät auf den Auskleidungsmaterialien aufliegend verwendet werden, ohne dass Beschädigung der Auskleidungsmaterialien eintreten. Der hierbei erforderliche Anpressdruck wird ohne Probleme über die Auskleidungsmaterialien auf die tiefer liegenden Kunststoffmaterialien, insbesondere die Befestigungs- und Fixpunkte übertragen, welche als Gegenhalter dienen. Darüber hinaus wird durch die nur begrenzte Plastifizierung der vorgenannten Auskleidungsmaterialien der Anpressdruck nur für einen geringen Zeitraum benötigt, da sich sowohl das Schweißmittel als auch die Auskleidungsmaterialien durch schnelles Abkühlen relativ schnell verbinden lassen.

Ein weiterer wesentlicher Vorteil des Handschweißgerätes mit Positioniereinrichtung besteht darin, dass der geringe erforderliche Energieeintrag zu keiner Verformung der Kunststoffmaterialien führt und insbesondere die Bildung von Schwachstellen aufgrund von Querschnittsreduzierungen vermieden werden kann. Der Energieeintrag kann mit dem Handschweißgerät so gering wie möglich gehalten werden, wobei durch die Verwendung eines elektromagnetischen Strahlungskopfes eine genaue Dosierung erfolgen kann und die aufzubringende Energie unmittelbar in eine absorbierende Beschichtung eingebracht wird. Ferner kann der Anpressdruck so gering wie möglich gehalten werden, wobei eine manuelle Andruckkraft von Hand ausreichend ist.

Die zum Einsatz kommenden Kunststoffmaterialen können thermostabile Additive in Form von Partikeln aufweisen, welche lasersensitiv oder infrarotsensitiv sind und aus organischen und anorganischen Materialien mit einer Mindesttemperaturstabilität bestehen, wobei die Temperatur den Verarbeitungstemperaturen der verwendeten Kunststoffmaterialien entspricht und wobei die Additive in Abhängigkeit des Wärmeeinwirkungsverfahrens beispielsweise aus Farbmitteln in Form von Farbstoffen oder Farbpigmenten, wie Rußteilchen oder Glimmer mit Zinn-Antimonbeschichtung, bestehen können, um eine Absorbtion der elektromagnetischen Strahlung zu ermöglichen.

Die in der Beschichtung absorbierenden thermostabilen Additive bestehen hauptsächlich ebenfalls aus infrarotsensitiven oder lasersensitiven Partikeln, vorzugsweise organischen oder anorganischen Materialien mit einer Mindesttemperaturstabilität, die den Verarbeitungstemperaturen der verwendeten Kunststoffmaterialien entsprechen und in Abhängigkeit des Wärmeeinwirkungsverfahrens, beispielsweise aus Farbpigmenten, wie Rußteilchen oder Glimmer mit Zink-Antimonbeschichtung bestehen. Ähnlich verhält es sich mit den absorbierenden Kunststoffmaterialien die auf die Wandfläche aufgeklebt werden. Auch bei diesen Kunststoffmaterialien werden entsprechende thermostabile Partikel wie bei der absorbierenden Beschichtung eingesetzt. Die hierbei verwendeten Kunststoffmaterialen und Beschichtungen absorbieren elektromagnetische Strahlung im Wellenlängenbereich von 150 bis 2.500 Nanometer, vorzugsweise 500 bis 1.500 Nanometer, besonders bevorzugt von 800 bis 1.000 Nanometer.

Als mögliche elektromagnetische Strahlungsquelle, kommt ein Festkörperlaser, ein Gaslaser, Halbleiterlaser oder eine Infrarotquelle, beispielsweise eine Xenon-Kurzbogenlampe in Frage oder es wird ein CO₂-Laser verwendet. Alternativ kann eine Mikrowellenstrahlung oder ein Induktionsschweißverfahren angewendet werden. Sämtliche der vorgenannten Geräte erzeugen elektromagnetische Strahlung, die dazu genutzt werden können, um den Fügebereich der Behälterwandungen auszukleiden, damit die Kunststoffmaterialien nur insoweit plastifiziert werden, das eine sichere Schweißverbindung geschaffen wird.

Um den Anforderungen der Berufsgenossenschaft Rechnung zu tragen, ist in weiterer Ausgestaltung vorgesehen, dass die elektromagnetische Strahlung des Strahlungskopfes innerhalb einer geschlossenen Wandung oder über einen Lichtleiter dem Fügebereich, welcher durch das Schweißmittel und die Kunststoffmaterialien gebildet wird, zuführbar ist. Diese Vorkehrung ist beispielsweise dann erforderlich, wenn als elektromagnetische Strahlungsquelle ein Laser zum Einsatz kommt.

Beim Induktionsschweißen wird die zum Schweißen notwendige Wärme mittels eines alternierenden Magnetfeldes in die Fügezone eingetragen. Die Hauptphasen dieses Verfahrens sind Aufheizen, Konsolidieren unter Druck sowie Abkühlen, wobei die Haupteinflussparameter durch den Konsolidierungsdruck und die Temperaturen der Fügezone bestimmt sind. Beim Verschweißen von Kunststoffmaterialien ist ein Schweißzusatzstoff erforderlich, der die Energie eines elektromagnetischen Feldes in Wärme umsetzt. Dieser Schweißzusatzstoff, im Weiteren als Füllstoff bezeichnet, bleibt dauerhaft in der Schweißzone.

Als mögliche Füllstoffe kommen unter anderem ferromagnetische Stoffe infrage, wobei insbesondere die Verwendung von Nanopartikeln oder Mahlgut möglich ist. Als Nanopartikel oder Nanoteilchen bezeichnet man einen Verbund von wenigen bis einigen tausend Atomen oder Molekülen. Der Name hat hierbei einen direkten Bezug auf deren Größe die typischerweise bei 1 bis 100 Nanometern liegt. Nanopartikel können sowohl auf natürlichen Wege als durch synthetische Verfahren hergestellt werden, die gezielt mit neuen Eigenschaften oder Funktionalitäten ausgestattet sind, wie zum Beispiel elektrische Leitfähigkeit, chemische Reaktivität. Synthetische Nanopartikel können entsprechend ihrer chemischen und physikalischen Eigenschaften untergliedert werden. In der Forschung und Anwendung sind folgende Gruppen verbreitet:

Kohlenstoffhaltige Nanopartikel, Metalloxide, Titandioxid, Aluminiumoxid, Eisenoxid, Zinkoxid sowie Zeolithe und andere auf Silizium basierende mesoporöse Materialien wie MCM-41 oder SBA-15, Halbleiter, Metalle, Metallsulfide und Polymere wie Dendrimere und Blockcopolymere, wobei die kohlenstoffhaltigen Nanopartikel in unterschiedlichen Formen vorliegen können, beispielsweise als Fullerene, Nanoröhrchen oder Cabon black (Rußpartikel).

Die Nanopartikel oder das Mahlgut kann eine thermische Anregung durch ein Magnetfeld oder ein elektrisches Feld erfahren, wobei ein Magnetfeld eine Bewegung der Nanopartikel in einem Stoff hervorruft, während elektrische Felder eine Anregung der Elektronen hervorrufen. Beide Maßnahmen führen zu einer Erwärmung der Nanopartikel oder des Mahlguts aufgrund der entstehenden Reibung.

Eine Ummagnetisierung eines magnetisierten ferromagnetischen Stoffes erfolgt bei normalen Materialien mit vielen Weiss'chen Bezirken durch die Verschiebung der Potentialwälle zwischen den einzelnen Domänen, dass heißt die magnetischen Momente können sich an den Grenzen des einen Weiss'schen Bereich annähern und gehören dann zur benachbarten Domäne. Sinkt nun die Größe der Teilchen unterhalb der Größe der Weiss'schen Bereiche besteht der betreffende Partikel nur aus einem Weiss'schen Bereich. In solchen "Single domain particels" ist eine Verschiebung eines Potentialwalls nicht möglich, da kein Wall zwischen zwei Domänen besteht und es somit keine Wahrscheinlichkeit für ein antiparallel ausgerichtetes atomares magnetischen Moment gibt. Dass heißt in Einzeldomänenpartikeln können sich die Spins nur kollektiv ändern, was sich in einer sehr hohen Koerzivitätsfeldstärke niederschlägt.

Kristallite von Ferromagnetika kann man sich aus Domänen zusammengesetzt vorstellen. Innerhalb dieser Domänen oder Weiss'chen Bezirke sind die atomaren magnetischen Momente parallel ausgerichtet. Das Volumen der Weiss'chen Bereiche liegt typischerweise bei 10⁻⁴ bis 10⁻⁶ mm³.

Bringt man einen ferromagnetischen Stoff in ein äußeres Magnetfeld, so richten sich die magnetischen Momente der Weiss'schen Bezirke parallel zum äußeren Magnetfeld aus. Es erfolgt demzufolge eine Magnetisierung. Die Magnetisierung wächst mit steigender Feldstärke des äußeren Magnetfeldes bis zu einer Sättigungsfeldstärke, bei der eine vollständige Ausrichtung der Elektronenspins erreicht ist. Lässt man anschließend die Feldstärke des äußeren Magnetfeldes wieder bis auf null sinken, folgt die Magnetisierung nicht der ursprünglichen Kurve, sondern entlang einer Hysterese-Scheife. Bei der Feldstärke = 0 bleibt eine mehr oder weniger starke Remanenzmagnetisierung erhalten, sodass der ferromagnetische Stoff in einen Permanentmagneten umgewandelt wird. Erst bei Erreichen der Koerzivitätsfeldstärke, die antiparallel zur Magnetisierung des Stoffes ausgerichtet ist, geht die Magnetisierung der Probe auf null zurück. Steigt die Feldstärke des äußeren Magnetfeldes weiter bis auf einen Wert an, so wird die negative Sättigungsmagnetisierung erreicht. Verringert man nun wieder die Feldstärke, dreht deren Richtung um und vergrößert sie dann sukzessive. Diese Eigenschaften sind ferromagnetischen Stoffen imanent, wobei durch die Änderung des Magnetfeldes beispielsweise mit Hilfe einer Induktionsspule diese Möglichkeit zur Erwärmung ferromagnetischer Stoffe ausgenutzt werden kann. Hierbei können die ferromagnetischen Stoffe aus beispielsweise einem metallischen Mahlgut bestehen oder es können Nanopartikel eingesetzt werden, die weitere positive Eigenschaften aufweisen. Grundsätzlich ist von einer anderen Isotropie magnetischer Nanopartikel auszugehen und dies hat einen großen Einfluss auf deren Koerzivität. Bei magnetischen Nanopartikel spielen hauptsächlich die Kristalle und Partikelformationsisotropie eine Rolle. Aber auch Anisotropien, die durch Austausch zwischen dem Kern und der Hülle verursacht werden, dürfen im Einzelfall nicht vernachlässigt werden. Magnetokristalline Anisotropie wird durch die Orbitalspin-Kopplung und die energetisch bevorzugte Ausrichtung der Magnetisierung entlang einer bevorzugten Achse verursacht. Die Koerzivitätsfeldstärke eines Nanophasenmaterials ist proportional zur Anisotropie, sodass diese Materialien als Füllstoffe für Induktionsschweißungen verwendet werden können. Eine polykristalline Probe von Füllstoffen besitzt aufgrund der willkürlichen Orientierung der Teilchen keine Nettoanisotropie. Jedoch können nicht sphärische Teilchen eine Partikelformanisotropie zeigen, da es leichter ist ein zylindrisches Teilchen entlang der Kante als entlang der kurzen Kante zu magnetisieren. Die Abweichung von der sphärischen Form muss nicht besonders stark ausgeprägt sein, so bewirkt eine Abweichung von 1,1 bis 1,5% von der Kugelform schon eine Vervierfachung der Koerzivitätsfeldstärke.

Besonders interessant in diesem Zusammenhang sind die Eigenschaften von Nanopartikeln, welche magnetisch, ferrimagnetisch, ferromagnetisch, antiferromagnetisch oder supraparamagnetisch sein können. Der Superparamagnetismus in Nanopartikeln wird durch das Absinken des Teilchenvolumens weiter begründet, sodass die atomaren magnetischen Momente immer stärker durch die thermische Bewegung der Teilchen beeinflusst werden und sich nicht weiter parallel ausrichten können. Es kommt zu Superparamagnetismus. Superparamagnetische Teilchen verhalten sich genauso wie paramagnetische Teilchen, jedoch haben sie ein erheblich größeres magnetisches Moment. Unterhalb einer sogenannten Blocktemperatur verhalten sich diese Stoffe wieder ferromagnetisch. Superparamagnetische Stoffe zeigen keine Hystereseschleife, sodass sie experimentell leicht von ferromagnetischen Teilchen unterschieden werden können. Die Eigenschaft der Nanopartikel hängt jedoch zum Beispiel von der erwähnten Blocktemperatur und von der Form der Teilchen ab. Beispielsweise können stäbchenförmige magnetische Nanopartikel mit einer Abmessung von 2 x 10 nm eine Blocktemperatur von nur 110 K besitzen, kugelförmige Teilchen mit einem Durchmesser von 2 nm jedoch eine von 12 K.

Bei der Synthese von magnetischen Nanopartikeln wird man vor einer Reihe von Problemen gestellt. Um ein einheitliches Verhalten der Nanopartikel zu erhalten ist es von essentieller Wichtigkeit, einige Parameter möglichst genau zu steuern. Zum Einen ist es wünschenswert eine möglichst enge Größenverteilung der Partikel zu erhalten, da das magnetische Verhalten von Nanopartikeln maßgeblich durch deren Größe bestimmt wird. Durch gängige Syntheseverfahren kann man die Größenverteilung nur bis auf eine Abweichung von etwa 10% einengen. Im Allgemeinen werden jedoch Fraktionen benötigt, deren Abweichung in der Größenverteilung bei weniger als 5% liegen. Ein gängiges Verfahren ist die fraktionierte Flockung, durch Zugabe eines reinen Lösungsmittels zu einer Probe von Nanopartikeln von unterschiedlicher Größe konglomerieren die größten Partikel, da diese die größten van der Waals Anziehungskräfte besitzen. Das Konglomerat kann dann durch Zentrifugieren abgetrennt und der Vorgang wiederholt werden.

Ein weiterer Parameter ist die Kristallinität der Produkte. Wünschenswert ist eine hohe Kristallinität, um eine möglichst hohe Magnetisierung zu erreichen. Aber auch die Beeinflussung der Kristallstruktur ist ein wichtiger Parameter, da man über ihn die Anisotropie der magnetischen Nanopartikel steuern kann. Im Allgemeinen erreicht man sowohl die Erhöhung der Kristallinität als auch die Beeinflussung der Kristallstruktur durch einen kontrollierten Alterungsprozess, den man zum Beispiel durch Erwärmen auf eine bestimmte Temperatur über eine gewisse Dauer erreichen kann. Zur Herstellung in der einzelnen Nanopartikeln sind verschiedene Verfahren bekannt auf die hier nicht im Einzelnen eingegangen werden kann.

Zur Verbindung unterschiedlichster Kunststoffmaterialien ist die Verwendung von Nanopartikeln als Füllstoff mit ihren magnetischen, ferrimagnetischen, ferromagnetischen, antiferromagnetischen oder supraparamagnetische Eigenschaften besonders geeignet, wobei der Füllstoff nanoskalige, magnetische oder oxidische Partikel enthält, die aus aggregierten Primärpartikeln bestehen können oder wobei der Füllstoff aus Ferriten, Oxiden oder Metallmischoxiden bestehen kann. Die Teilchengröße liegt typischerweise zwischen 1 und 500 nm, insbesondere zwischen 2 und 100 nm.

Eine Anregung der Nanopartikeln kann beispielsweise durch Mikrowellenstrahlung mit einer Frequenz von 1,5 bis 10 GHz, vorzugsweise im Bereich von 2 bis 3 GHz erfolgen, jedoch sind andere elektromagnetische Strahlungen ebenfalls verwendbar, durch welche die Eigenschaften der Nanopartikel als Füllstoffe ebenfalls ausgenutzt werden können und zu einer Erwärmung der zu verschweißenden Materialien, vorzugsweise Kunststoffmaterialien, führt.

Alternativ zu den Nanopartikeln können verschiedene Metalle als Mahlgut den Kunststoffmaterialien in angereicherter Form zugegeben werden, sodass mit Hilfe eines elektromagnetischen Feldes unter Berücksichtigung der sich durch die Feldänderung ergebenden Bewegungen innerhalb des angereicherten Materials zu einer Erwärmung führen und somit zur Verschweißung verschiedener Kunststoffmaterialien herangezogen werden können. Hierbei sollte eine elektromagnetische Strahlung verwendet werden, welche typischer Weise im Resonanzbereich der verwendeten Nanopartikel oder des Mahlgutes liegt, um einen hohen Energieeintrag zu erzielen, wobei durch gezielte Zugabe von Nanopartikeln eine Änderung der Resonanzfrequenz erfolgen kann.

Der besondere Vorteil von Nanopartikeln oder Mahlgut besteht hierbei darin, dass auf die Verwendung von transparenten Kunststoffmaterialien verzichtet werden kann und stattdessen gegebenenfalls preiswertes Kunststoffmaterial mit entsprechender Anreichung verwendet werden kann. Hierbei reichen Anreichungen von Nanopartikeln von typischerweise 1 bis 5%, vorzugsweise 2 bis 3%, aus, um mit Hilfe einer Induktionsvorrichtung oder einer Mikrowellenbestrahlung eine Verschweißung durchzuführen. Die Verwendung von Mahlgut, insbesondere fein gemahlenem Metall (Metallstaub) ist ebenfalls aufgrund der Dipolwirkung für Compounds geeignet. Insbesondere wird im Weiteren durch die Mikrowellenbestrahlung oder Induktionsschweißung aufgrund der verwendeten Energiequellen eine hohe Arbeitssicherheit gewährleistet.

Die Erfindung wird im Weiteren anhand der Figuren näher erläutert.

Es zeigt
- Fig. 1: in einer geschnittenen Seitenansicht ein erstes Ausführungsbeispiel für ein Handschweißgerät mit Schlauchring und Andruckblende sowie einer davon abgesetzten Positioniereinrichtung, bestehend aus einem Positionierring und einem Aufsetzring,
- Fig. 2: in einer geschnittenen Seitenansicht ein zweites Ausführungsbeispiel für ein Handschweißgerät mit Flanschscheiben und einer davon abgesetzten Positioniereinrichtung, bestehend aus einem Positionierring und einen Aufsetzring,
- Fig. 3: in einer perspektivischen Ansicht die an das Handschweißgerät anschraubbaren Flanschscheiben mit Andruckblende,
- Fig. 4: in einer Draufsicht die Flanschscheiben gemäß Figur 3,
- Fig. 5: in einer ersten Seitenansicht die Anordnung der Flanschscheiben gemäß Figur 3,
- Fig. 6: in einer weiteren Seitenansicht die Flanschscheiben gemäß Figur 3,
- Fig. 7: in einer Seitenansicht die an das Handschweißgerät anschraubbaren Flanschscheiben mit Andruckblende und Schlauch,
- Fig. 8: in einer perspektivischen Ansicht eine Positioniereinrichtung mit einem Positionierring mit Saugfüßen,
- Fig. 9: in einer Draufsicht und Seitenansicht die Positioniereinrichtung gemäß Figur 8,
- Fig. 10: in einer Draufsicht und Seitenansicht die Zentrierscheibe der Positioniereinrichtung und
- Fig. 11: in einer geschnittenen Seitenansicht eine Positioniereinrichtung mit Saugring.

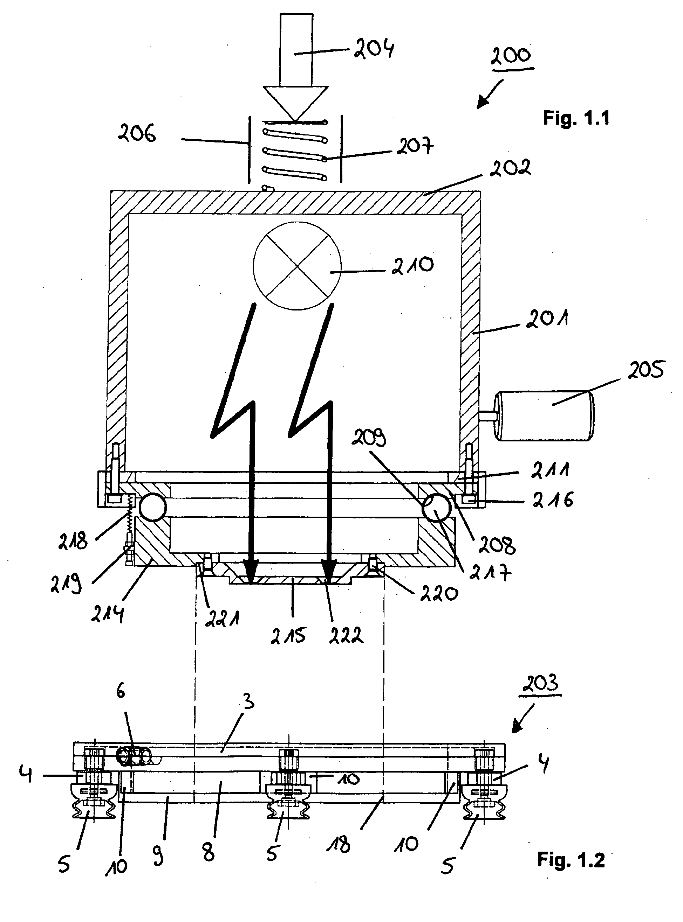

Die Figuren 1.1 und 1.2 zeigen in einer geschnittenen Seitenansicht ein Handschweißgerät 200, welches zur Verwendung mit einer Positioniereinrichtung 203 vorgesehen ist. Das erfindungsgemäße Handschweißgerät 200 besteht aus einem Gehäuse 201, welches als einteilige Variante dargestellt ist. Es besteht jedoch die Möglichkeit das Gehäuse aus mehreren Einzelkomponenten zu fertigen. Oberhalb des Gehäuses 201 ist durch einen Pfeil 204 die Möglichkeit einer Krafteinleitung dargestellt, welche unmittelbar auf eine in einer Federführung 206 geführte Feder 207 ausgeübt wird. Anderenends ruht die Feder 207 auf der oberen Gehäuseabdeckung 202, sodass die Kraft über die Feder und das Gehäuse 201 letztendlich auf eine Andruckblende 215 übertragen wird. Das Gehäuse 201 kann hierbei durch einen Handgriff 205 zusätzlich unterstützend gehalten werden. Die eingeleitete Kraft dient dazu einen Druck auf die zu verschweißenden Materialien auszuüben, und zwar solange bis nach erfolgter Plastifizierung und Abkühlung eine Aushärtung der Fügezone eingetreten ist. Mit Hilfe der Feder 207 besteht hierbei die Möglichkeit Druckschwankungen aufzufangen, um eine gleichmäßige Andruckkraft durch die Andruckblende 215 zu gewährleisten.

Innerhalb des Gehäuses ist eine Strahlungsquelle 210 angeordnet, welche durch die beiden Blitzpfeile symbolisiert wird, wobei die ausgehende elektromagnetische Strahlung durch eine vorhandene Lochmaske der Andruckblende 215 unmittelbar in die zu verschweißenden Materialien, vorzugsweise Kunststoffmaterialien, eingebracht wird. Im gezeigten Ausführungsbeispiel ist das Gehäuse 201 nach unten offen gestaltet und durch eine Flanschscheibe 208 insoweit verschlossen. Die Flanschscheibe 208 wird unter Zuhilfenahme eines Distanzringes 211 und umgangsverteilter Schraubbolzen 216 mit dem Gehäuse verbunden. Die Flanschscheibe 208 besitzt eine umlaufende muldenförmige Vertiefung 209, welche zur Aufnahme eines mit einer inkompressiblen Flüssigkeit gefüllten Schlauches 217 vorgesehen ist. Der Schlauch 217 liegt hierbei zwischen der Flanschscheibe 208 und einem Positionierring 214, wobei eine Befestigung durch umfangsverteilte Federn 218 mit Schraubverstellung 219 erfolgt. Die Federn 218 sind hierbei mit der Schraubverstellung 219 einenends verbunden und ruhen anderenends in einer Vertiefung der Flanschscheibe 208, sodass eine quasi elastische Verbindung zwischen der Flanschscheibe 208 und dem Positionierring 214 vorliegt. Der Positionierring 214 dient im Weiteren als Träger für eine Andruckblende 215, welche mittels Schrauben 220 mit dem Positionierring 214 verschraubt ist. Die Andruckblende 215 ruht hierbei mit einem ersten größeren radialen Abschnitt in einer Vertiefung 221 des Positionierrings 214 und wird durch die Schrauben 220 gehalten. Die Andruckblende 215 weist beispielsweise segmentförmige Durchbrüche 222 auf, durch welche die elektromagnetische Strahlung unmittelbar auf die zu verschweißenden Kunststoffmaterialien gelangt.

Unterhalb des Handschweißgerätes ist eine Positioniereinrichtung 203 dargestellt, welche aus einem Positionierring 3 mit mehreren umfangsverteilten Füßen 4 und daran befindlichen Saugfüßen 5 besteht. Die Saugfüße 5 kommen hierbei unmittelbar auf den zu verschweißenden Kunststoffmaterialien zu liegen und ermöglichen eine Fixierung der Positioniereinrichtung 203 auf den Kunststoffmaterialien. Zu diesem Zweck wird mit Hilfe eines Vakuumgerätes, welches nicht dargestellt ist, aus den Saugfüßen 5 über einen Vakuumanschluss 6 die Luft abgesaugt, sodass die Positioniereinrichtung 203 auf dem Kunststoff festlegbar ist. Unterhalb des Positionierrings 3 befindet sich ein Aufsetzring 9, welcher über Stege 10 mit dem Positionierring 3, vorzugsweise einstückig, verbunden ist. Zwischen den Stegen 10 sind hierbei mehrere umfangsverteilte Ausnehmungen 8 ausgebildet. Der Aufsatzring 9 besitzt eine Bohrung 18, welche von der Größe her so dimensioniert ist, dass die Andruckblende 215 eingesetzt werden kann. Durch die Bohrung 18 kommt somit bei einem Aufsetzen des Handschweißgerätes 200 auf die festgelegte Positioniereinrichtung 203 die Andruckblende 215 unmittelbar auf den Kunststoffmaterialien zu liegen.

Der besondere Vorteil dieser ersten Ausführungsvariante besteht darin, dass mit Hilfe der Positioniereinrichtung 203 zunächst eine Fixierung an der zu verschweißenden Position der Kunststoffmaterialien vorgenommen werden kann, im Anschluss daran kann das Handschweißgerät 200 auf die Positioniereinrichtung 203 mit Hilfe der vorhandenen Führung aufgesetzt werden, wobei im Weiteren durch den mit inkompressibler Flüssigkeit gefüllten Schlauch 217 sichergestellt ist, dass ein gleichmäßiger Anpressdruck über die Andruckblende 215 auf das Kunststoffmaterial erfolgt. Für den Fall, dass das Handschweißgerät 200 nicht rechtwinklig zu den zu verschweißenden Kunststoffmaterial aufgesetzt werden sollte, findet somit ein Druckausgleich statt und es ist immer gewährleistet, dass ein gleichmäßiger Anpressdruck vorliegt.

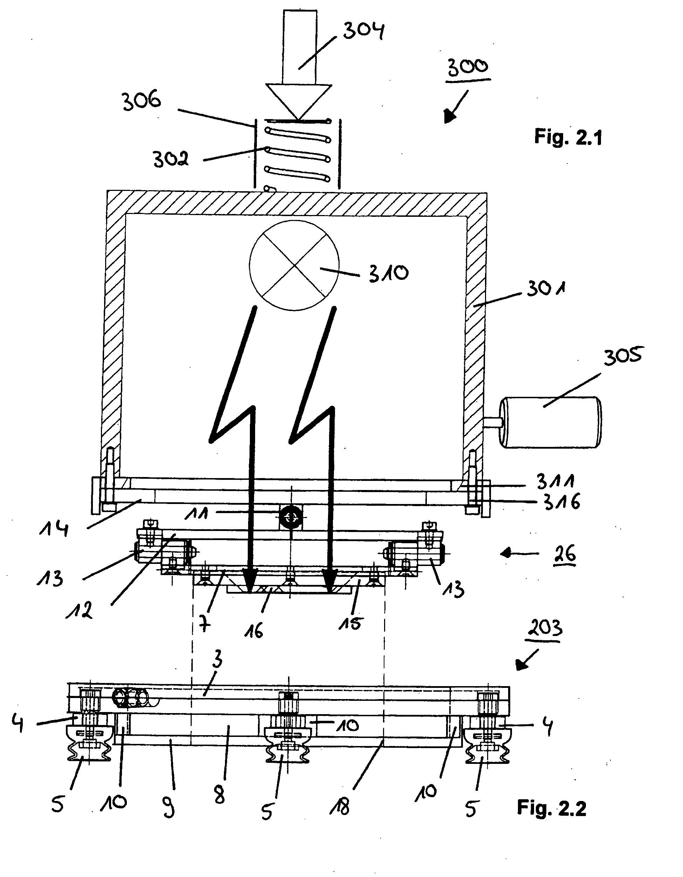

Die Figuren 2.1 und 2.2 zeigen eine zweite Ausführungsvariante eines Handschweißgeräts 300 mit einem Gehäuse 301 und einer oberhalb des Gehäuses angeordneten Feder 302, welche in einer Federführung 306 aufgenommen ist. Auch auf diese Feder 302 wird in Pfeilrichtung 304 eine Kraft ausgeübt, um über das Gehäuse 301 und die vorhandene Andruckblende 16 einen Anpressdruck auf die zu verschweißenden Materialien auszuüben. Im inneren des Gehäuses 301 ist eine Strahlungsquelle 310 für elektromagnetische Strahlung angeordnet, welche durch die Blitzpfeile symbolisiert durch die Andruckblende 16 und die dort vorhandenen segmentförmigen Öffnungen unmittelbar auf die Kunststoffmaterialien einwirken kann. Auch bei dieser Ausführung besitzt das Gehäuse 301 einen Handgriff 305, wobei das Gehäuse 301 nach unten offen gestaltet ist. Die Öffnung des Gehäuses 301 wird zunächst durch eine Distanzscheibe 311 und im Anschluss daran durch eine Flanschscheibe 14 verschlossen, wobei eine Verschraubung mit Hilfe von Schraubbolzen 316 erfolgt. Die Flanschscheibe 14 ist Bestandteil einer Führungseinrichtung 26, welche im Weiteren in die aus Figur 1 bekannte Positioniereinrichtung 203 eingesetzt werden kann. Die Führungseinrichtung 26 besteht zunächst aus der mit dem Gehäuse 301 verschraubten Flanschscheibe 14, einer weiteren Flanschscheibe 12 sowie einer Flanschscheibe 7. Zwischen der ersten und zweiten Flanschscheibe 14, 12 ist ein Lagerelement 11 angeordnet, und zwar jeweils paarig, während zwischen der zweiten und dritten Flanschscheibe 7, 12 ein zweites Lagerelement 13, ebenfalls paarig, angeordnet ist. Die beiden Lagerelemente 11, 13 sind jeweils um 90° Grad zueinander verdreht angeordnet, sodass eine Schwenkbeweglichkeit der Führungseinrichtung 26 gegeben ist. Somit kann das Gehäuse 301 im Bedarfsfall unter einem Winkel < 90° Grad gegenüber der zu bearbeitenden Kunststoffebene angesetzt werden. Die Führungseinrichtung 26 ermöglicht hierbei eine Schwenkbeweglichkeit des Gehäuses 301 gegenüber der Positioniereinrichtung 203.

Die Positioniereinrichtung 203 entspricht in identischer Form der aus Figur 1 bekannten Ausführungsform, wobei in die Bohrung 18 die Andruckblende 16 einsetzbar ist. Nach erfolgtem Aufsetzen der Führungseinrichtung 26 in die Positioniereinrichtung 203 kann somit ein Verrutschen des Handschweißgerätes 300 auf den zu verschweißenden Materialien ausgeschlossen werden, wobei im Weiteren durch die Schwenkbeweglichkeit eine hohe Flexibilität hinsichtlich eines Arbeitswinkels besteht. Trotz eines möglicherweise nicht im rechten Winkel aufgesetzten Handschweißgerätes 300 kann somit über die Führungseinrichtung 26 eine gleichmäßige Andruckkraft auf die Andruckblende 16 und damit auf das Kunststoffmaterial übertragen werden.

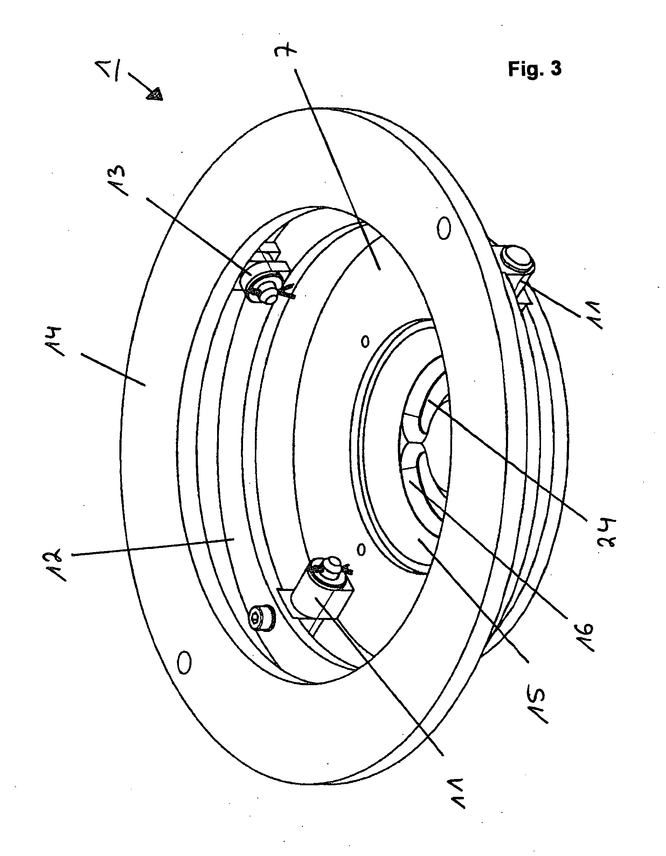

Figur 3 zeigt in einer perspektivischen Ansicht ein erstes Teil der Positioniereinrichtung 203, bestehend aus einer ersten Flanschscheibe 14 zur Montage am Handschweißgerät, einer zweiten Flanschscheibe 12 sowie einer dritten Flanschscheibe 7 als Führungsring. Die Flanschscheibe 7 dient unter anderem zur Befestigung der Andruckblende 16, welche über einen Befestigungsring 15 mit der Flanschscheibe 7 verschraubt ist. Die einzelnen Flanschscheiben 7, 12, 14 sind über Lagerelemente 11, 13 miteinander verbunden, und zwar in der Weise, dass jeweils zwei paarig angeordnete Lagerelemente 11, 13 eine gemeinsame Achse bilden und die eine Achse bildenden Lagerelemente 11, 13 zwischen der ersten und zweiten Flanschscheibe 12, 14 beziehungsweise der zweiten und dritten Flanschscheibe 7, 14 hierbei um 90° versetzt zueinander angeordnet sind.

Die Lagerelemente 11, 13 selbst bestehen aus einer Lagerbuchse 20 mit einem Lagerzapfen 21, welcher über einen Splint 22 und einen vergrößerten Kragen 23 in der Lagerbuchse 20 befestigt ist. Des Weiteren ist aus dieser Ansicht ersichtlich, dass die Andruckblende 16 segmentartige Durchbrüche 24 aufweist, durch welche hindurch die elektromagnetische Strahlung in die absorbierenden Schichten des Auskleidungsmaterials und/oder der Befestigungs- und Fixpunkte gelangt. Alternativ besteht die Möglichkeit, dass als Andruckblende 16 eine für elektromagnetische Strahlung transparente Glasscheibe verwendet wird.

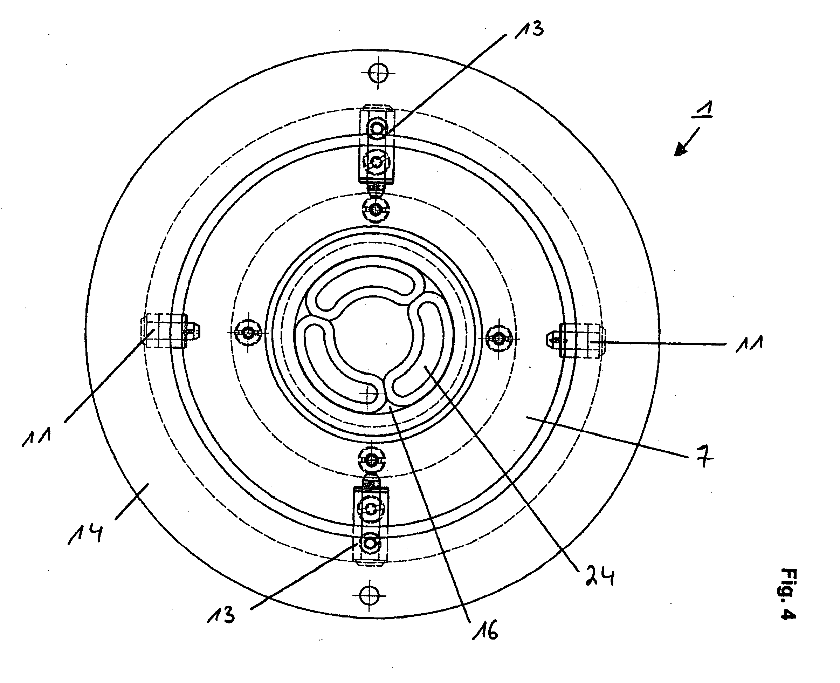

Figur 4 zeigt in einer Draufsicht die aus Figur 3 bekannte Positioniereinrichtung 203 mit den Flanschscheibe 7, 12, 14 und den Lagerelementen 11, 13. Aus dieser Ansicht ist ersichtlich, dass die Andruckblende 16 mit segmentförmigen Durchbrüchen 24 versehen ist, durch welche hindurch die elektromagnetische Strahlung auf das Auskleidungsmaterial gelangt.

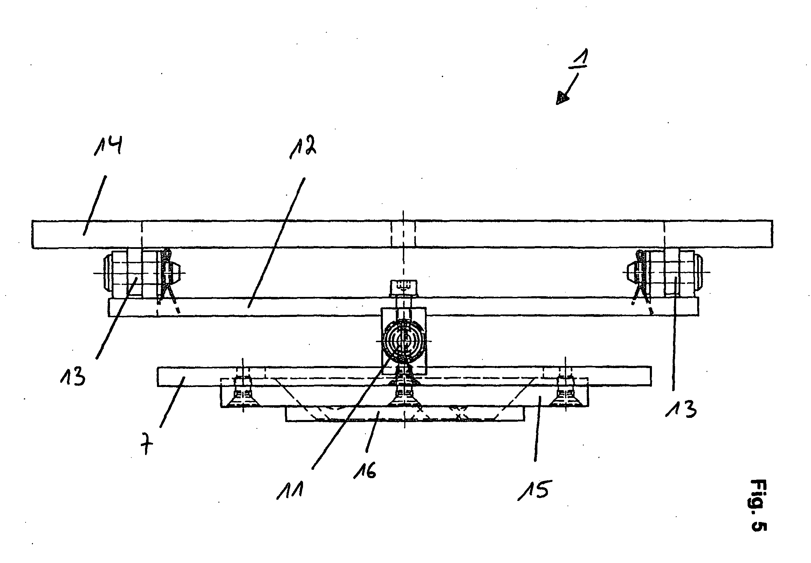

Figur 5 zeigt in einer ersten Seitenansicht die Positioniereinrichtung 203 gemäß Figur 3, wobei aus dieser Ansicht der stufenweise Aufbau der Positioniereinrichtung 203 ersichtlich ist, mit einer oberen Flanschscheibe 14, welche zur Montage an das Handschweißgerät vorgesehen ist sowie einer mittleren Flanschscheibe 12 und einer unteren Flanschscheibe 7. Aus dieser Ansicht wird hierbei insbesondere deutlich, dass die obere und mittlere Flanschscheibe 12, 14 über die Lagerelemente 13 miteinander verbunden sind, während die mittlere und untere Flanschscheibe 12, 7 über Lagerelemente 11 miteinander verbunden sind. Die um 90° versetzte Position der Lagerelemente 11, 13 ermöglicht hierbei eine Verschwenkung in alle denkbaren Aufsetzrichtungen des Handschweißgerätes, sodass ein gleichmäßiger Anpressdruck bei einem schief aufgesetzten Handschweißgeräte erzielt werden kann. Die Andruckblende 16 liegt hierbei unmittelbar mit der Andruckfläche 25 auf dem Auskleidungsmaterial auf. Damit der aufzubringende Druck durch das Handschweißgerät alleine durch die Andruckblende 16 übertragen wird, ist, wie insbesondere aus Figur 1 ersichtlich, der Positionierring 7 in der taschenförmigen Ausnehmung 8 geführt, welche unabhängig von der Höhe des Positionierringes 3 ein direktes Andrücken der Andruckblende 16 auf das Auskleidungsmaterial ermöglicht. Lediglich die genaue Position oberhalb des Befestigungs- und Fixpunktes wird durch den Positionierring 3 festgelegt, wobei durch eine visuelle Kontrolle die genaue Position jederzeit überprüft und korrigiert werden kann. Nach Aufsetzen des Handschweißgerätes 2 muss die elektromagnetische Strahlungsquelle kurzzeitig eingeschaltet werden, bis eine Plastifizierung erfolgt ist, und danach wird der Anpressdruck aufgebracht, bis die teilweise plastifizierten Auskleidungsmaterialien beziehungsweise Befestigungs- und Fixpunkte insoweit ausgehärtet sind, dass eine dauerhafte Verbindung vorliegt.

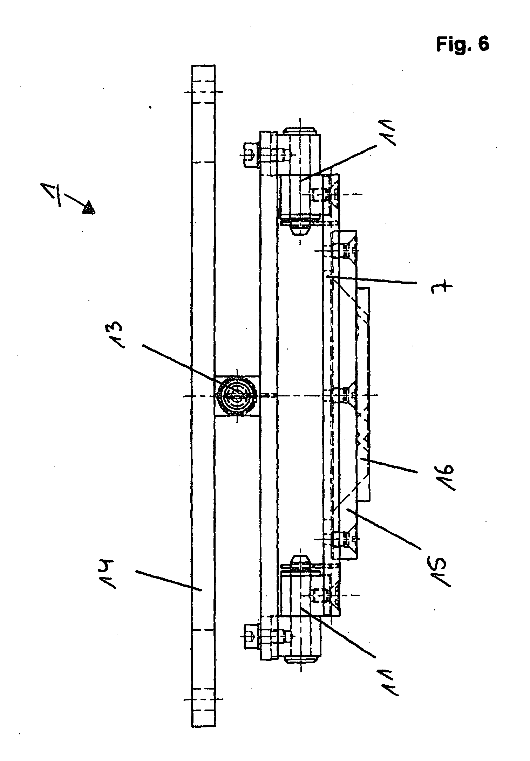

Figur 6 zeigt in einer weiteren Seitenansicht die Positioniereinrichtung 203 gemäß dem Aufbau der vorhergehenden Figuren insbesondere der Figur 5, wobei aus dieser Darstellung, welche gegenüber der Figur 5 um 90° versetzt ausgeführt ist, die Verbindung der mittleren und unteren Flanschscheibe 12, 7 über die Lagerelemente 13 ersichtlich ist.

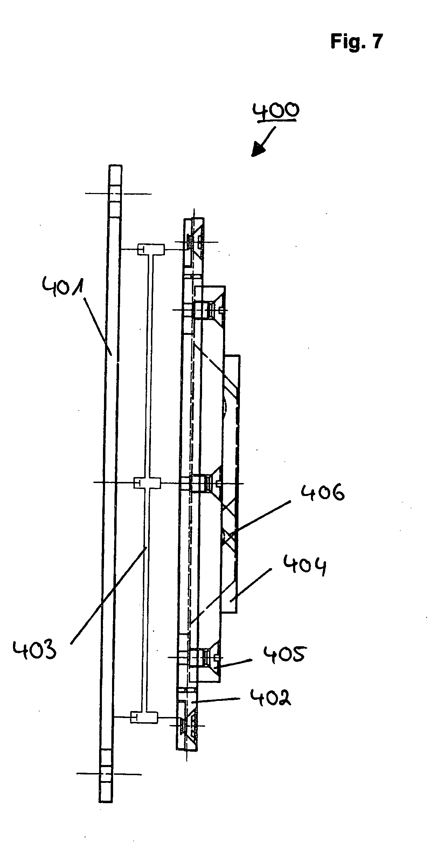

Figur 7 zeigt in einer perspektivischen Darstellung die Positioniereinrichtung 203, und zwar einen Positionierring 3, welcher unmittelbar auf den zu verschweißenden Kunststoffmaterialien mit Hilfe von Füßen 4 aufgesetzt wird, welche kopfseitig über Saugfüße 5 verfügen, wobei über einen Vakuumanschluss 6 ein Unterdruck in den Saugfüßen 5 erzeugt werden kann. Zu diesem Zweck sind die einzelnen Füße 4 über eine nicht dargestellte Ringleitung mit dem Vakuumanschluss 6 verbunden. Die Positioniereinrichtung 203 besteht hierbei aus einem Positionierring 3 und einem Aufsetzring 9 mit einer Bohrung 18, welche im Weiteren zur Aufnahme der Andruckblende vorgesehen ist. Über Stege 10, welche umfangsverteilt einstückig an dem Positionierring 3 angeformt sind, erfolgt eine Verbindung mit dem Aufsetzring 9. Durch die ausgebildeten Stege entsteht jeweils zwischen zwei benachbarten Stegen 10 eine Ausnehmung 8, welche eine Aufsetzkontrolle des Handschweißgerätes ermöglicht. Die Länge der Stege 10 wurde hierbei so gewählt, dass das Handschweißgerät mit Andruckblende 16 exakt in den Positionierring 3 eingesetzt werden kann und nach dem Aufsetzen des Handschweißgerätes die Andruckblende 16 unmittelbar auf dem Kunststoffmaterial zu liegen kommt.

Der Schweißvorgang selbst wird mit Hilfe von elektromagnetischer Strahlung ausgeführt, wobei das Handschweißgerät 2 in unterschiedlichster Form, je nach Art der elektromagnetischen Strahlung, aufgebaut sein kann. Mit Hilfe der Positioniereinrichtung 203 können sämtliche Handschweißgeräte 2 unabhängig von der Art der elektromagnetischen Strahlung verwendet werden.

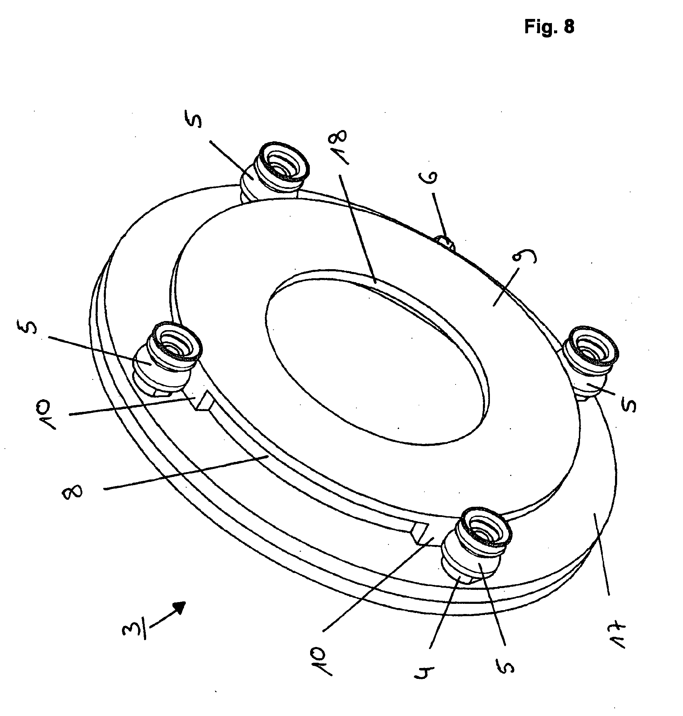

Figur 8 zeigt in einer geschnittenen Seitenansicht eine weitere Führungseinrichtung 400, welche beispielsweise mit dem Handschweißgerät 300 verwendet werden kann. Die Führungseinrichtung 400 besitzt eine erste Flanschscheibe 401, welche zur Verschraubung mit dem nicht dargestellten Handschweißgerät vorgesehen ist. Zwischen der Flanschscheibe 401 und einer weiteren Flanschscheibe 402 ist ein elastischer Körper 403 angeordnet, welcher ebenso wie die Ausführungsvariante gemäß Figur 2 eine Schwenkbeweglichkeit des aufgesetzten Handschweißgerätes in geringem Umfang ermöglicht, wobei gleichzeitig sichergestellt ist, dass der aufzubringende Anpressdruck gleichmäßig über die gesamte Fläche der vorderen Andruckblende 404 gewährleistet ist. Die Andruckblende 404 ist mit Schrauben 405 mit der Flanschscheibe 402 verschraubt und besitzt ein Außenmaß, welches korrespondierend zu der Bohrung 18 der Positioniereinrichtung 203 ausgebildet ist. Durch vorhandene segmentartige Durchbrüche 406 ist hierbei sichergestellt, dass die aus dem Handschweißgerät austretende elektromagnetische Strahlung durch die Andruckblende 404 hindurch auf die Kunststoffmaterialien einwirken kann. Alternativ besteht die Möglichkeit, dass als Andruckblende 404 ein Material verwendet wird, welches beispielsweise für elektromagnetische Strahlung transparent ist. Hierbei kann es sich beispielsweise um ein durchsichtiges Glas oder Kunststoffmaterial handeln. Diese ergänzende Ausführungsform ist als Ersatz für die aus Figur 3 bekannte Führungseinrichtung 26 vorgesehen.

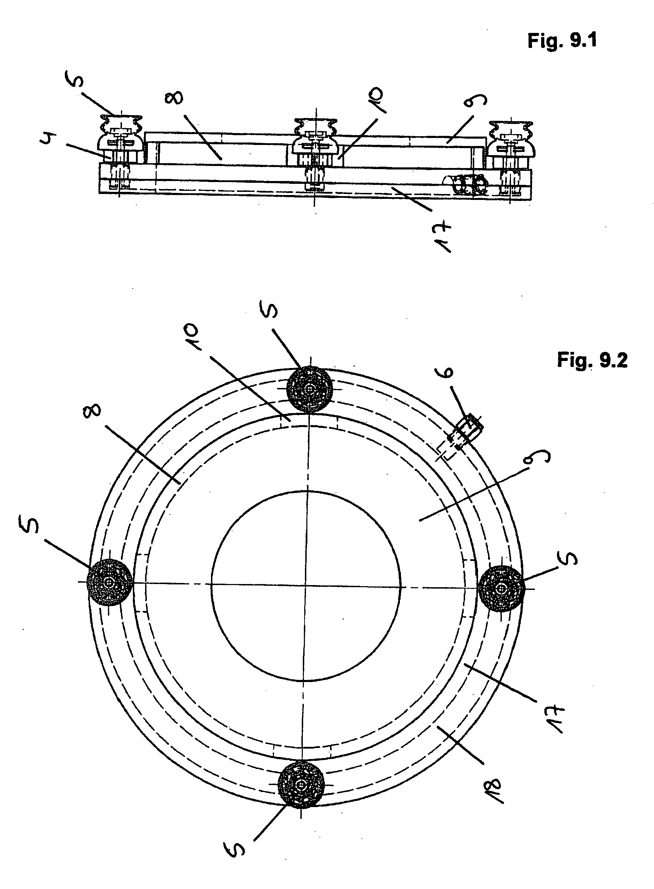

Die Figuren 9.1 und 9.2 zeigen in einer Draufsicht und einer Seitenansicht die Positioniereinrichtung 203 mit Positionierring 3, woraus ersichtlich ist, dass vier Saugfüße 5 umfangsverteilt angeordnet sind und über einen Ringkanal 19 eine Verbindung zum Vakuumanschluss 6 vorliegt. Der Ringkanal 19 ist in dem Positionierring 3 ausgebildet, welcher zur Aufnahme der einzelnen Saugfüße 5 verwendet wird und darüber hinaus zur Befestigung des Aufsetzrings 9 über die Stege 10 dient.

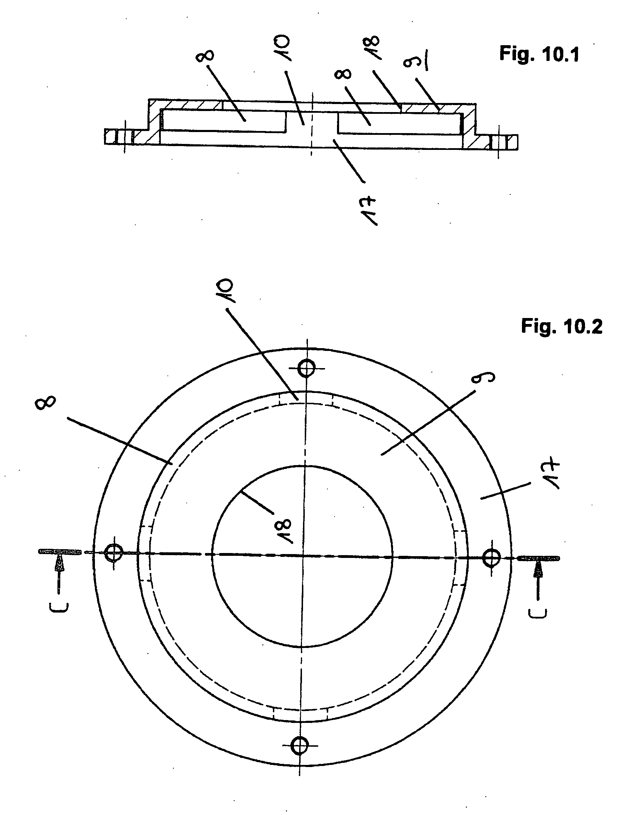

Die Figuren 10.1 und 10.2 zeigen in einer Draufsicht und einer geschnittenen Seitenansicht den stufenförmig ausgebildeten Positionierring 3 nochmals in einer Einzeldarstellung, aus der die topfförmige Ausbildung ersichtlich ist. Über die Stege 10 ist hierbei der Positionierring 3 mit dem Aufsetzring 9 verbunden, sodass die topfförmige Ausgestaltung entsteht.

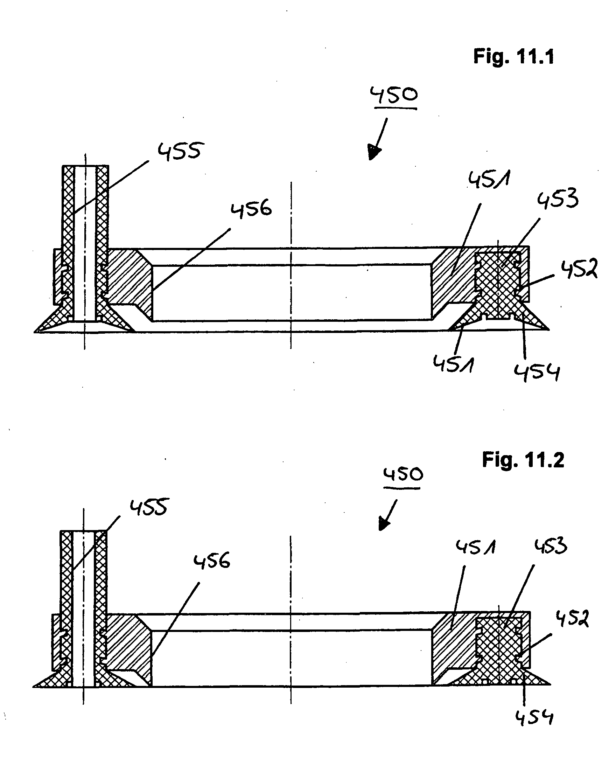

Die Figuren 11.1 und 11.2 zeigen in zwei geschnittenen Seitenansichten eine ersatzweise vorzusehende Positioniereinrichtung 450. Diese Positioniereinrichtung 450 besteht aus einer Ringscheibe 451 mit einer umlaufenden Nut 452, in die ein Gummiring 453 mit V-förmig auseinander laufenden Dichtungslippen 454 auf das nicht gezeigte Kunststoffmaterial aufgesetzt werden kann. Über einen Vakuumanschluss 455 kann die Luft unterhalb des Gummirings 453 abgesaugt werden, sodass sich die Dichtungslippen 454 an dem Kunststoffmaterial festsaugen können. Die obere Teilfigur zeigt die Positioniereinrichtung 450 vor dem Ansaugen und die untere Teilfigur nach dem Ansaugen mit gespreizten Dichtungslippen 454. Somit kann mit Hilfe dieser Positioniereinrichtung 450 ebenfalls eine Festlegung der beschriebenen Handschweißgeräte 200 und 300 erfolgen. Damit die Handschweißgeräte 200, 300 wie in den vorhergehend beschriebenen Beispielen mit Hilfe einer Führungseinrichtung 26 in die Positioniereinrichtung 450 eingesetzt werden können, weist diese eine Bohrung 456 auf, die korrespondierend zu den Führungselementen der Führungseinrichtung 26 dimensioniert ist. Durch die Bohrung 456 hindurch kann somit die jeweilige Andruckblende der Führungseinrichtung zentriert auf die Kunststoffmaterialien aufgesetzt werden, wodurch die bereits geschilderten Vorteile entstehen, dass nach Festlegung der Positioniereinrichtung 450 ein Verrutschen des Handschweißgerätes 200, 300 ausgeschlossen werden kann.

### Bezugszeichenliste

- 3: Positionierring
- 4: Fuß
- 5: Saugfuß
- 6: Vakuumanschluss
- 7: Flanschscheibe
- 8: Ausnehmung
- 9: Aufsetzring
- 10: Steg
- 11: Lagerelement
- 12: Flanschscheibe
- 13: Lagerelement
- 14: Flanschscheibe
- 15: Befestigungsring
- 16: Andruckblende
- 17: Flanschscheibe
- 18: Bohrung
- 19: Ringkanal
- 20: Lagerbuchse
- 21: Lagerzapfen
- 22: Splint
- 23: Kragen
- 24: Durchbruch
- 25: Andruckfläche
- 26: Führungseinrichtung
- 200: Handschweißgerät
- 201: Gehäuse
- 202: Gehäuseabdeckung
- 203: Positioniereinrichtung
- 204: Pfeil
- 205: Handgriff
- 206: Federführung
- 207: Feder
- 208: Flanschscheibe
- 209: Vertiefung
- 210: Strahlungsquelle
- 211: Distanzring
- 212: Abschlussplatte
- 213: Stirnfläche
- 214: Positionierring
- 215: Andruckblende
- 216: Schraube
- 217: Schlauch
- 218: Feder
- 219: Schraubverstellung
- 220: Schraube
- 221: Vertiefung
- 222: Durchbruch
- 300: Handschweißgerät
- 301: Gehäuse
- 302: Feder
- 304: Pfeil
- 305: Handgriff
- 306: Federführung
- 310: Strahlungsquelle
- 311: Distanzscheibe
- 316: Schraubbolzen
- 400: Führungseinrichtung
- 401: Flanschscheibe
- 402: Flanschscheibe
- 403: Elastischer Körper
- 404: Andruckblende
- 405: Schraube
- 406: Durchbruch
- 450: Positioniereinrichtung
- 451: Ringscheibe
- 452: Nut
- 453: Gummiring
- 454: Dichtungslippen
- 455: Vakuumanschluss
- 456: Bohrung

## Patentansprüche

1. Positioniereinrichtung (203) für ein Handschweißgerät (200, 300), insbesondere für ein Kunststoffschweißgerät, umfassend zumindest eine dem Handschweißgerät (200, 300) zugeordnete Andruckblende (16, 215, 404) und einem dem zu verschweißenden Material zugeordneten Positionierring (3, 214), wobei der Positionierring (3, 214) auf dem zu verschweißenden Material festlegbar ist und in den Positionierring (3, 214) die Andruckblende (16, 215, 404) einsetzbar ist, welche zur Übertragung eines über den Umfang gleichmäßigen Anpressdruckes über den Positionierring auf die zu verschweißenden Materialien vorgesehen ist.

2. Positioniereinrichtung (203) nach Anspruch 1,
**dadurch gekennzeichnet,**
**dass** der Positionierring (3, 214) als Vakuumring ausgebildet ist und zumindest einen Vakuumanschluss (6) für eine Vakuumpumpe und mehrere, vorzugsweise vier, Saugfüße (5) aufweist, welche auf dem zu bearbeitenden Material mit Unterdruck festlegbar sind.

3. Positioniereinrichtung (203) nach Anspruch 1,
**dadurch gekennzeichnet,**
**dass** der Positionierring (3, 214) einen umlaufenden Saugring aufweist, welcher über einen Vakuumanschluss (6) mit Unterdruck festlegbar ist.

4. Positioniereinrichtung (203) nach einem der Ansprüche 1 bis 3,
**dadurch gekennzeichnet,**
**dass** der Positionierring (3, 214) eine radiale Ausnehmung (8) aufweist, in welche eins Flanschscheibe (7) einsetzbar ist.

5. Positioniereinrichtung (203) nach einem der Ansprüche 1 bis 4,
**dadurch gekennzeichnet,**
**dass** die Flanschscheibe (7) unmittelbar mit dem Handschweißgerät (200, 300) verbunden ist.

6. Positioniereinrichtung (203) nach einem der Ansprüche 1 bis 5,
**dadurch gekennzeichnet,**
**dass** diese aus mehreren Flanschscheiben (7, 12, 14, 17, 208, 401, 402) besteht, wobei eine erste Flanschscheibe (7, 12, 14, 17, 208, 401, 402) zur Befestigung am Handschweißgerät (200, 300) vorgesehen ist und eine diametral entgegengesetzte Flanschscheibe (7) als Führung ausgebildet ist, welche beispielsweise zweiteilig ausgebildet ist und aus der Flanschscheibe (7) und einer Andruckblende (16) besteht.

7. Positioniereinrichtung (203) nach einem der Ansprüche 1 bis 6,
**dadurch gekennzeichnet,**
**dass** die Flanschscheiben (7, 12, 14, 17) über jeweils zwei paarweise angeordnete Lagerelemente (11, 13) untereinander verbunden sind, welche eine Schwenkachse bilden.

8. Positioniereinrichtung (203) nach einem der Ansprüche 1 bis 7,
**dadurch gekennzeichnet,**
**dass** die Schwenkachse der ersten und zweiten Flanschscheibe (12, 14) und die der zweiten und dritten Flanschscheibe (14, 7) um 90° versetzt zueinander angeordnet sind.

9. Positioniereinrichtung (203) nach einem der Ansprüche 1 bis 8,
**dadurch gekennzeichnet,**
**dass** die Lagerelemente (11, 13) aus jeweils zumindest zwei Lagerschalen mit einem Lagerzapfen (21) bestehen, wobei der Lagerzapfen (21) durch einen überstehenden Kragen (23) und einen Splint (22) gesichert ist.

10. Positioniereinrichtung (203) nach einem der Ansprüche 1 bis 9,
**dadurch gekennzeichnet,**
**dass** die Flanschscheiben (7, 12, 14) jeweils über mehrere hydraulische Kolben miteinander verbunden sind.

11. Positioniereinrichtung (203) nach einem der Ansprüche 1 bis 6,
**dadurch gekennzeichnet,**
**dass** die Flanschscheiben (7, 12, 14) durch einen ringförmigen Schlauch (217) miteinander verbunden sind, wobei der Schlauch (217) mit einem zumindest teilweise inkompressiblen Medium gefüllt ist.

12. Positioniereinrichtung (203) nach einem der Ansprüche 1 bis 11,
**dadurch gekennzeichnet,**
**dass** zwischen Flanschscheibe (7) und Andruckblende (16, 215, 404) ein mit inkompressibler Flüssigkeit gefüllter Schlauch angeordnet ist, welcher einerseits mit der Andruckblende (16) und andererseits mit der Flanschscheibe (7) verbunden ist.

13. Positioniereinrichtung (203) nach einem der Ansprüche 1 bis 12,
**dadurch gekennzeichnet,**
**dass** die dritte, als Führung ausgebildete Flanschscheibe (7) mit der Andruckblende (16, 215, 404) unmittelbar verbunden ist, welche den Durchtritt von elektromagnetischer Strahlung auf das zu bearbeitende Material gewährleistet.

14. Positioniereinrichtung (203) nach einem der Ansprüche 1 bis 13,
**dadurch gekennzeichnet,**
**dass** die Andruckblende (16, 215, 404) auf der zur Anlage vorgesehenen Außenseite zumindest partiell gummielastische Auflagen aufweist und/oder dass die Andruckblende (16, 215, 404) radial außen liegende und/oder radial innen liegende Ausgleichselemente aufweist.

15. Positioniereinrichtung (203) nach einem der Ansprüche 1 bis 15,
**dadurch gekennzeichnet,**
**dass** die Andruckblende (16, 215, 404) als Lochmaske mit kreisringförmig angeordneten segmentartigen Durchbrüchen (24) ausgestaltet ist oder dass die Andruckblende (16, 215, 404) zumindest teilweise aus einem Material besteht, welches für elektromagnetische Strahlung transparent ist und/oder dass die Andruckblende (16, 215, 404) aus Metall mit einem Ringspalt und Verbindungsstegen oder aus einem Kreisring besteht.

## Claims

1. Positioning device (203) for a hand-held welding apparatus (200, 300), in particular for a plastic welding apparatus, comprising at least one pressure screen (16, 215, 404) allocated to the hand-held welding apparatus (200, 300), and a positioning ring (3, 214) allocated to the material to be welded, wherein the positioning ring (3, 214) can be fixed on the material to be welded and the pressure screen (16, 215, 404) can be inserted into the positioning ring (3, 214), the pressure screen (16, 215, 404) being provided for transmitting a contact pressure that is uniform across the periphery onto the materials to be welded via the positioning ring.

2. Positioning device (203) according to claim 1, **characterized in that** the positioning ring (3, 214) is embodied as a vacuum ring and comprises at least one vacuum connection (6) for a vacuum pump and several, preferably four, suction feet (5) which can be fixed on the material to be worked by vacuum.

3. Positioning device (203) according to claim 1, **characterized in that** the positioning ring (3, 214) comprises a surrounding suction ring which can be fixed by vacuum via a vacuum connection (6).

4. Positioning device (203) according to one of claims 1 to 3, **characterized in that** the positioning ring (3, 214) comprises a radial recess (8) into which a flanged disk (7) can be inserted.

5. Positioning device (203) according to one of claims 1 to 4, **characterized in that** the flanged disk (7) is directly connected to the hand-held welding apparatus (200, 300).

6. Positioning device (203) according to one of claims 1 to 5, **characterized in that** it consists of several flanged disks (7, 12, 14, 17, 208, 401, 402), wherein a first flanged disk (7, 12, 14, 17, 208, 401, 402) is provided to be fixed to the hand-held welding apparatus (200, 300), and a diametrically opposed flanged disk (7) is embodied as a guide which is embodied, for example, in two pieces and consists of the flanged disk (7) and a pressure screen (16).

7. Positioning device (203) according to one of claims 1 to 6, **characterized in that** the flanged disks (7, 12, 14, 17) are interconnected each via two bearing elements (11, 13) arranged in pairs which form a swivelling axis.

8. Positioning device (203) according to one of claims 1 to 7, **characterized in that** the swivelling axis of the first and the second flanged disks (12, 14) and that of the second and third flanged disks (14, 7) are arranged offset with respect to each other by 90°.

9. Positioning device (203) according to one of claims 1 to 8, **characterized in that** the bearing elements (11, 13) each consist of at least two bearing shells with a bearing pin (21 the bearing pin (21) being secured by a protruding collar (23) and a split pin (22).

10. Positioning device (203) according to one of claims 1 to 9, **characterized in that** the flanged disks (7, 12, 14) are each interconnected via several hydraulic pistons.

11. Positioning device (203) according to one of claims 1 to 6, **characterized in that** the flanged disks (7, 12, 14) are interconnected by an annular tube (217), the tube (217) being filled with an at least partially incompressible medium.

12. positioning device (203) according to one of claims 1 to 11, **characterized in that** between the flanged disk (7) and the pressure screen (16, 215, 404), a tube filled with an incompressible liquid is arranged which is connected on one side with the pressure screen (16) and on the other side with the flanged disk (7).

13. Positioning device (203) according to one of claims 1 to 12, **characterized in that** the third flanged disk (7) which is embodied as a guide is directly connected with the pressure screen (16, 215, 404) which ensures the passage of electromagnetic radiation onto the material to be worked.

14. Positioning device (203) according to one of claims 1 to 13, **characterized in that** the pressure screen (16, 215, 404) comprises at least partially rubbery-elastic supports on the outer side provided for abutment, and/or that the pressure screen (16, 215, 404) comprises radially external and/or radially internal compensation elements.

15. Positioning device (203) according to one of claims 1 to 15, **characterized in that** the pressure screen (16, 215, 404) is designed as aperture mask with annularly arranged segment-like openings (24), or that the pressure screen (16, 215, 404) at least partially consists of a material that is transparent to electromagnetic radiation, and/or that the pressure screen (16, 215, 404) consists of metal with an annular gap and connecting webs, or of an annulus.

## Revendications

1. Dispositif de positionnement (203) pour un appareil de soudage manuel (200, 300), en particulier pour un appareil de soudage de matières plastiques, comprenant au moins un écran de pression (16, 215, 404) associé à l'appareil de soudage manuel (200, 300) et une bague de positionnement (3, 214) associée au matériau à souder, dans lequel bague de positionnement (3, 214) peut être immobilisée sur le matériau à souder et un écran de pression (16, 215, 404) peut être inséré dans la bague de positionnement (3, 214), qui est prévu pour la transmission aux matériaux à souder d'une pression répartie uniformément sur la périphérie par l'intermédiaire de la bague de positionnement.

2. Dispositif de positionnement (203) selon la revendication 1, **caractérisé par le fait que** la bague de positionnement (3, 214) est agencée sous la forme d'un bague d'aspiration et présente au moins un raccord d'aspiration (6) pour une pompe à vide et plusieurs, préférentiellement quatre, pieds ventouses (5), qui peuvent être fixés sur le matériau à traiter par dépression.

3. Dispositif de positionnement (203) selon la revendication 1, **caractérisé par le fait que** la bague de positionnement (3, 214) présente un anneau de succion périphérique, qui peut être fixé par dépression par l'intermédiaire d'un raccord d'aspiration (6).

4. Dispositif de positionnement (203) selon l'une des revendications 1 à 3, **caractérisé par le fait que** la bague de positionnement (3, 214) présente un évidement (8) radial, dans lequel un flasque (7) peut être inséré.

5. Dispositif de positionnement (203) selon l'une des revendications 1 à 4, **caractérisé par le fait que** le flasque (7) est relié directement à l'appareil de soudage manuel (200, 300).

6. Dispositif de positionnement (203) selon l'une des revendications 1 à 5, **caractérisé par le fait que** celui-ci est constitué de plusieurs flasques (7, 12, 14, 17, 208, 401, 402), dans lequel un premier flasque (7, 12, 14, 17, 208, 401, 402) est prévu pour la fixation sur l'appareil de soudage manuel (200, 300) et un flasque (7) diamétralement opposé est agencé sous la forme d'un moyen de guidage, qui est formé par exemple de deux parties et est constitué du flasque (7) et de l'écran de pression (16).

7. Dispositif de positionnement (203) selon l'une des revendications 1 à 6, **caractérisé par le fait que** les flasques (7, 12, 14, 17) sont reliés entre eux avec respectivement deux éléments de palier (11, 13) disposés par paires, qui forment un axe de pivotement.

8. Dispositif de positionnement (203) selon l'une des revendications 1 à 7, **caractérisé par le fait que** l'axe de pivotement des premier et second flasques (12, 14) et celui des second et troisième flasques (14, 7) sont disposés décalés de 90° entre eux.

9. Dispositif de positionnement (203) selon l'une des revendications 1 à 8, **caractérisé par le fait que** les éléments de palier (11, 13) sont constitués respectivement d'au moins deux coussinets de palier avec un tourillon (21), le tourillon (21) étant sécurisé par une collerette (23) en saillie et une goupille fendue (22).

10. Dispositif de positionnement (203) selon l'une des revendications 1 à 9, **caractérisé par le fait que** les flasques (7, 12, 14) sont reliés entre eux respectivement par l'intermédiaire de plusieurs pistons hydrauliques,

11. Dispositif de positionnement (203) selon l'une des revendications 1 à 6, **caractérisé par le fait que** les flasques (7, 12, 14) sont reliés entre eux par un tuyau (217) annulaire, le tuyau (217) étant rempli d'un fluide au moins partiellement incompressible.

12. Dispositif de positionnement (203) selon l'une des revendications 1 à 11, **caractérisé par le fait qu'**un tuyau rempli de liquide incompressible est disposé entre le flasque (7) et l'écran de pression (16, 215, 404), le tuyau étant relié d'un côté à l'écran de pression (16) et de l'autre côté au flasque (7).

13. Dispositif de positionnement (203) selon l'une des revendications 1 à 12, **caractérisé par le fait que** le troisième flasque (7) étant conçu sous la forme d'un moyen de guidage est relié directement à l'écran de pression (16, 215, 404), qui garantit le passage de rayonnement électromagnétique sur le matériau devant être traité.

14. Dispositif de positionnement (203) selon l'une des revendications 1 à 13, **caractérisé par le fait que** l'écran de pression (16, 215, 404) présente sur la face extérieure prévue pour l'appui des revêtements au moins partiellement élastiques et/ou que l'écran de pression (16, 215, 404) présente des éléments de compensation situés radialement à l'extérieur et/ou situés radialement à l'intérieur.

15. Dispositif de positionnement (203) selon l'une des revendications 1 à 15, **caractérisé par le fait que** l'écran de pression (16, 215, 404) est conçu comme un masque perforé avec des orifices (24) en forme de segments disposés en forme d'anneau circulaire ou que l'écran de pression (16, 215, 404) est constitué au moins partiellement d'un matériau, qui est transparent pour un rayonnement électromagnétique et/ou que l'écran de pression (16, 215, 404) est constitué de métal avec un interstice annulaire et des barrettes de liaison ou d'un anneau circulaire.
